(19) Europäisches Patentamt
European Patent Office
Office européen des brevets

(11) **EP 2 123 918 B1**

(12) **EUROPÄISCHE PATENTSCHRIFT**

(45) Veröffentlichungstag und Bekanntmachung des Hinweises auf die Patenterteilung:
**17.05.2017   Patentblatt 2017/20**

(51) Int Cl.:
***B60R 21/20*** *(2011.01)*      ***B60R 21/213*** *(2011.01)*

(21) Anmeldenummer: **09168956.2**

(22) Anmeldetag: **25.08.2005**

(54) **BEFESTIGUNGSELEMENT**

FASTENING DEVICE

ÉLÉMENT DE FIXATION

(84) Benannte Vertragsstaaten:
**DE FR GB SE**

(30) Priorität: **06.09.2004   DE 202004014219 U**

(43) Veröffentlichungstag der Anmeldung:
**25.11.2009   Patentblatt 2009/48**

(62) Dokumentnummer(n) der früheren Anmeldung(en) nach Art. 76 EPÜ:
**05782810.5 / 1 787 031**

(73) Patentinhaber: **Takata AG**
**63743 Aschaffenburg (DE)**

(72) Erfinder: **Baumgartner, Peter**
**89312  Günzburg (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**EP-A- 0 889 247      EP-A1- 0 908 633**
**EP-A1- 1 186 787      DE-A1- 4 026 922**
**DE-A1- 19 607 786     US-A- 3 864 789**
**US-A- 4 728 068      US-A- 5 539 962**

**Beschreibung**

Ein Befestigungselement ist auch aus der Veröffentlichungsschrift zur internationalen Patentanmeldung WO 02/28690 A1 bekannt. Dieses Befestigungselement wird durch einen Befestigungsclip gebildet, mit dem ein Airbag als zu befestigendes Teil außen an einer Trägerband, beispielsweise einem Karosserieteil eines Fahrzeugs, befestigt werden kann. Konkret wird der Befestigungsclip zur Befestigung in einer Öffnung der Trägerwand verrastet. Der Befestigungsclip ist hierzu derart ausgestaltet, dass er in die Öffnung der Trägerwand einsetzbar ist und diese durchgreift, wobei bei Erreichen einer vorgegebenen Endlage beim Einsetzen des Befestigungsclips in der Trägerwand eine Verriegelung auftritt, _ so dass ein Herausziehen des Befestigungsclips aus der Öffnung der Trägerwand unterbunden wird. Zur Verriegelung weist der Befestigungsclip sein Schnappelement und ein Anschlagselement auf. Das Anschlagselement liegt im verriegelten Zustand des Befestigungselements außen an der Trägerwand an. Unter der "Außenseite" der Trägerwand wird dabei diejenige Seite verstanden, an der sich das zu befestigende Teil, also der Airbag, befindet. Auf der anderen Wandseite der Trägerwand, also an der dem Airbag abgewandten Rückseite der Trägerwand, befindet sich das Schnappelement, das zur Verriegelung des Befestigungselements an der Rückseite der Trägerwand anliegt.

Des Weiteren offenbaren auch US 4 728 068, EP 1 186 787, US 5 539 962, US 3 864 789 und die DE 40 26 922 A1 entriegelbare Befestigungselemente.

Der Erfindung liegt die Aufgabe zugrunde, die Vereinfachung der Befestigung eines Airbags. Diese Aufgabe wird ausgehend von einem Befestigungselement der eingangs angegebenen Art erfindungsgemäß durch die Merkmale des Anspruchs 1 gelöst. Vorteilhafte Ausgestaltungen des erfindungsgemäßen Befestigungselements sind in Unteransprüchen angegeben. Danach ist vorgesehen, dass das Schnappelement eine Grundplatte mit zwei parallelen oder zumindest annähernd parallelen Seitenkanten aufweist und dass an jeder dieser beiden Seitenkanten jeweils eine Arretierplatte angebracht ist, mit der das Befestigungselement an der Trägerwand arretiert wird, wobei zwei Entriegelungselemente vorhanden sind, von denen eines mit der einen Arretierplatte und zusammenwirkt. Erfindungsgemäß sind die Entriegelungselemente jeweils mittig an einem der Grundplatte abgewandten Ende der Arretierplatten angebracht.

Ein wesentlicher Vorteil des erfindungsgemäßen Befestigungselements ist darin zu sehen, dass sich dieses aus der Öffnung der Trägerwand ohne weiteres wieder lösen lässt, indem das Entriegelungselement entsprechend betätigt wird. Das erfindungsgemäße Befestigungselement ermöglicht somit eine sehr einfache Handhabung, da sich mit diesem Teile an einer Trägerwand sowohl einfach befestigen als auch einfach wieder lösen lassen. Ein weiterer wesentlicher Vorteil des erfindungsgemäßen Befestigungselements besteht darin, dass sich das Befestigungselement aufgrund des Entriegelungselements von dem Träger lösen lässt, ohne dass es hierbei beschädigt wird. Das erfindungsgemäße Befestigungselement lässt sich somit mehrfach verwenden.

Ein dritter wesentlicher Vorteil des erfindungsgemäßen Befestigungselements ist darin zu sehen, dass dieses durch einen reinen "Clipsvorgang" installiert werden kann. Schrauben oder dergleichen sind zur Installation des Befestigungselements nicht erforderlich; auch müssen keine Gewinde oder sonstigen Vorkehrungen in der Öffnung der Trägerwand vorgesehen werden.

Besonders einfach und damit vorteilhaft lässt sich das Entriegelungselement betätigen, wenn dieses die Öffnung der Trägerwand durchgreift und somit unmittelbar von außen betätigt werden kann.

Bevorzugt steigt der Abstand der Arretierplatten zueinander mit wachsendem Abstand von der Grundplatte an, wobei der Abstand der Seitenwände an ihrem der Grundplatte abgewandten Ende größer als der Abstand der zugeordneten Öffnungsränder der Öffnung der Trägerwand ist. Im Querschnitt ist das Schnappelement somit annähernd U-bzw. V-förmig, wobei die beiden Arretierplatten die Seitenteile des U bzw. des V bilden.

Vorzugsweise sind die Arretierplatten federnd ausgestaltet und derart zusammendrückbar, dass beim Einführen des Befestigungselements in die Öffnung der Trägerwand der Abstand der Arretierplatten durch Einwirkung der Öffnungsränder der Öffnung derart reduziert wird, dass der Abstand der Arretierplatten dem Abstand der Öffnungslöcher entspricht; damit können dann die beiden Arretierplatten durch die Öffnung der Trägerwand hindurch geschoben werden.

Durch die beiden Entriegelungselemente lassen sich beide Arretierplatten betätigen, wodurch ein Entriegeln des Befestigungselements erleichtert wird.

Die Entriegelurigselemente können beispielsweise durch Laschen oder Winkelteile gebildet sein, die an dem der Grundplatte abgewandten Ende der jeweiligen Arretierplatte angebracht sind. Vorzugsweise sind die Entriegelungselemente mit ihrer jeweils zugeordneten Arretierplatte einstückig verbunden.

Die Anordnung der Entriegelungselemente an den Arretierplatten ist vorzugsweise dergestalt, dass eine Betätigung der Entriegelungselemente durch ein Zueinander-Zusammendrücken der Entriegelungselemente erfolgen kann.

Die Grundplatte des Schnappelements ist vorzugsweise quadratisch oder rechteckförmig, zumindest im Wesentlichen quadratisch oder im Wesentlichen rechteckförmig, ausgestaltet. Dabei weist die Grundplatte ein weiteres Paar Seitenkanten auf, die zu den Seitenkanten mit den davon abgehenden Arretierplatten jeweils senkrecht stehen und die zueinander parallel verlaufen. An jeder der zwei Seitenkanten dieses weiteren Seitenkantenpaares ist jeweils vorzugsweise eine Verbindungsplatte angeordnet. Diese Verbindungsplatten können beispielsweise dazu dienen, Anschlagsplatten des oben bereits erwähnten Anschlagelementes zu halten. Vorzugsweise weist das Anschlagelement zwei Anschlagsplatten auf, von denen eine mit der einen Verbindungsplatte und die andere mit der anderen Verbindungsplatte in Verbindung steht. Die Verbindungsplatten und ihre zugehörigen Anschlagsplatten können jeweils einstückig miteinander verbunden sein.

Besonders bevorzugt sind die Anschlagsplatten abgewinkelt ausgeführt, so dass bei arretiertem Befestigungselement diese federnd an der Außenseite der Trägerwand - also außen an der Trägerwand - anliegen.

Die abgewinkelten Anschlagsplatten können beispielsweise jeweils eine Teilplatte, die parallel zur Trägerwand und zur Grundplatte des Befestigungselements verläuft, sowie eine weitere Teilplatte aufweisen, die gegenüber der parallelen Teilplatte abgewinkelt ist. Vorzugsweise dient die zur Grundplatte parallele Teilplatte jeweils dazu, die abgewinkelte Teilplatte mit der zugeordneten Verbindungsplatte zu verbinden.

Bei dem Befestigungselement handelt es sich vorzugsweise um einen einstückigen Clip, vorzugsweise aus Metall oder Kunststoff. Das Befestigungselement kann beispielsweise durch ein einstückiges Stanzbiegeteil aus Metall gebildet sein.

Vorzugsweise sind die Entriegelungselemente derart ausgestaltet, dass sie ohne Spezialwerkzeug gelöst werden können. Im Übrigen ist das Befestigungselement vorzugsweise verdrehsicher ausgeführt; dies bedeutet, dass er in der Öffnung der Trägerwand nicht verdreht werden kann.

Als Erfindung wird darüber hinaus eine Anordnung angesehen, die das oben bereits beschriebene Befestigungselement sowie ein damit verbundenes Airbagmodul aufweist, das mittels des Befestigungselements an oder in einem Fahrzeug befestigt wird. Bei dem Airbagmodul kann es sich beispielsweise um ein Seitenairbagmodul handeln.

Die Erfindung wird nachfolgend anhand eines Ausführungsbeispiels erläutert, das in Figuren näher dargestellt ist. Hierbei zeigen:

Figuren 1 und 2     verschiedene Ansichten allein des Befestigungselements,

Figur 3     das Befestigungselement gemäß den Figuren 1 und 2 nach einer Befestigung an einer Trägerwand,

Figuren 4 bis 8     das Befestigungselement gemäß den Figuren 1 bis 3 beim Einsatz zur Befestigung eines Teiles an einer Trägerwand und

Figuren 9 bis 13     ein Ausführungsbeispiel eines Airbagmoduls, das mit dem Befestigungselement gemäß den Figuren 1 bis 7 an einer Fahrzeugkarosserie befestigt wird.

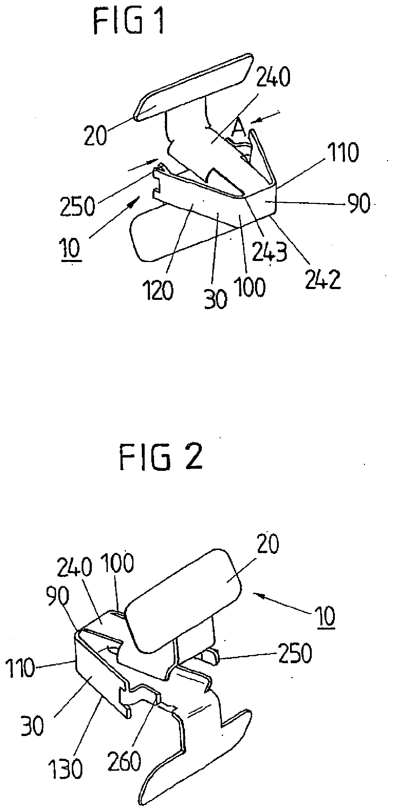

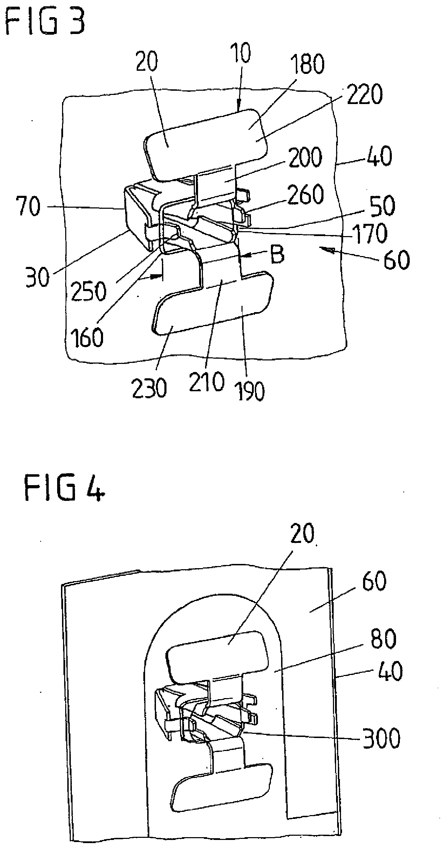

In den Figuren 1 und 2 ist ein Befestigungselement in Form eines Befestigungsclips 10 dargestellt. Das Befestigungselement 10 weist ein Anschlagelement 20 sowie ein Schnappelement 30 auf. Das Anschlagelement 20 und das Schnappelement 30 dienen zur Befestigung des Befestigungselementes 10 an einer Trägerwand 40, die in der Figur 3 schematisch dargestellt ist.

In der Figur 3 lässt sich erkennen, dass das Befestigungselement 10 zwecks Befestigung an der Trägerwand 40 durch eine Öffnung 50 der Trägerwand 40 hindurch gesteckt wird. Dabei greift das Schnappelement 30 durch die Öffnung 50 der Trägerwand hindurch und verriegelt das Befestigungselement 10 an der Trägerwand 40, sobald es tief genug eingeführt worden ist.

Im verriegelten Zustand liegt das Anschlagselement 20 an der "Außenseite" 60 der Trägerwand 40 an; unter der "Außenseite" wird nachfolgend diejenige Seite der Trägerwand 40 verstanden, an der ein zu befestigendes Teil, beispielsweise ein Airbag oder ein Airbagmodul, mit dem Befestigungselement 10 angebracht wird. Auf der anderen Seite 70 der Trägerwand 40 - nachfolgend kurz Rückseite 70 genannt - liegt das Schnappelement 30 an der Trägerwand 40 derart an, dass ein Herausziehen des Befestigungselements 10 aus der Öffnung 50 bzw. von der Trägerwand 40 nicht möglich ist.

Das Befestigen eines zu befestigenden Teiles an der Trägerwand 40 mit dem beschriebenen Befestigungselement ist schematisch in der Figur 4 dargestellt. Das zu befestigende Teil ist mit dem Bezugszeichen 80 gekennzeichnet und liegt an der Vorderseite 60 der Trägerwand 40 auf und wird mit dem Anschlagselement 20 an der Trägerwand 40 festgeklemmt.

Wie sich in den Figuren 1 bis 4 erkennen lässt, weist das Schnappelement 30 eine Grundplatte 90 auf, die im Wesentlichen rechteckförmig ausgestaltet ist. An zwei parallelen Seitenkanten 100 und 110 der Grundplatte 90 sind zwei Arretierplatten 120 und 130 einstückig angeformt. Die beiden Arretierplatten 120 und 130 weisen einen Abstand zueinander auf, der mit wachsendem Abstand der Arretierplatten 120 und 130 von der Grundplatte 90 ansteigt. Im Querschnitt betrachtet, sind die Grundplatte 90 und die beiden Arretierplatten 120 und 130 somit annähernd V-förmig. Der obere Abstand A zwischen den beiden Arretierplatten 120 und 130 ist derart bemessen, dass er größer als die Breite B der Öffnung 50 in der Trägerwand 40 ist. Es gilt also

$$A > B.$$

Die Querschnittsfläche der Grundplatte 90 ist derart gewählt, dass diese kleiner bzw. maximal so groß wie die Öffnung 50 der Trägerwand 40 ist. Somit ist es möglich, das Befestigungselement 10 ohne weiteres mit der Grundplatte 90 zuerst in die Öffnung 50 einzuführen. Bei einem solchen Einführen des Befestigungselements 10 in die Öffnung 50 werden die beiden Arretierplatten 120 und 130 gegen die beiden Öffnungsränder 160 und 170 anstoßen, so dass die beiden federnd bzw. elastisch von der Grundplatte 90 gehaltenen Arretierplatten 120 und 130 zusammengebogen werden, während das Befestigungselement 10 in die Öffnung 50 eingeführt wird.

Sobald eine vorgegebene Endlage erreicht ist, bei der die beiden Arretierplatten 120 und 130 die Öffnung 50 der Trägerwand 40 vollständig passiert haben, werden die beiden Arretierplatten 120 und 130 auseinander schnappen und somit eine Verriegelung des Befestigungselements 10 in der Öffnung 50 bewirken. Die beiden Arretierplatten 120 und 130 bilden also ein Schnappelement und verhindern aufgrund ihres Abstandes A zueinander ein Herausziehen des Befestigungselements 10 aus der Öffnung 50.

Während die Befestigung des Befestigungselements 10 auf der Rückseite 70 der Trägerwand 40 durch das Schnappelement 30 bewirkt wird, wird das Verriegeln des Befestigungselements 10 auf der Vorderseite 60 der Trägerwand 40 durch das Anschlagselement 20 bewirkt. Das Anschlagselement 20 weist hierzu zwei Anschlagsplatten 180 und 190 auf, die zur Verriegelung des Befestigungselements 10 federnd auf der Trägerwand 40 aufliegen.

Um dieses federnde Aufliegen auf der Trägerwand 40 zu bewirken, sind die beiden Anschlagsplatten 180 und 190 jeweils abgewinkelt aufgeführt. Beide Anschlagsplatten weisen jeweils eine parallele Teilplatte 200 bzw. 210 auf, die im Wesentlichen parallel zur Grundplatte 90 des Befestigungselements 10 und parallel zur Trägerwand 40 verläuft. An die beiden parallelen Teilplatten 200 und 210 ist jeweils eine abgewinkelte Teilplatte 220 und 230 angeformt und zwar in einem vorgegebenen Winkel. Dieser Winkel ist derart gewählt, dass die beiden abgewinkelten Teilplatten 220 und 230 in Richtung zur Trägerwand 40 bzw. zur Grundplatte 90 orientiert sind. Wird nun das Befestigungselement 10 in die Öffnung 50 eingeführt, so werden die beiden abgewinkelten Teilplatten 220 und 230 gegen die Vorderseite 60 der Trägerwand 40 gestoßen und federnd ausgelenkt, bis die beiden Arretierplatten 120 und 130 vollständig durch die Öffnung 50 hindurch geführt werden, auseinander schnappen und damit das Befestigungselement 10 verriegeln. Die beiden abgewinkelten Teilplatten 220 und 230 bewirken somit ein festes Anliegen des Befestigungselements 10 an der Trägewand 40, so dass ein Klappern des Befestigungselements 10 an der Trägerwand 40 unterbunden wird.

Insbesondere in den Figuren 1 und 2 ist gut erkennbar, dass die beiden abgewinkelten Teilplatten 220 und 230 mittels der beiden parallelen Teilplatten 200 und 210 jeweils mit einer Verbindungsplatte 240 und 241 verbunden sind. Die beiden Verbindungsplatten 240 und 241 sind außerdem jeweils mit der Grundplatte 90 verbunden, und zwar an parallelen Seitenkanten 242 und 243 der Grundplatte 90.

Wie sich in den Figuren 1 bis 3 außerdem erkennen lässt, ist an die beiden Arretierplatten 120 und 130 jeweils ein Entriegelungselement in Form einer Lasche oder eines Entriegelungsbügels 250 bzw. 260 angeformt. Die beiden Entriegelungsbügel erstrecken sich jeweils von dem der Grundplatte 90 abgewandten Ende der beiden Arretierplatten 120 bzw. 130 durch die Öffnung 50 an der Trägerwand 40 hindurch zur Vorderseite 60 der Trägerwand und sind von außen somit unmittelbar zugänglich. Durch ein Zusammendrücken der beiden Entriegelungselemente 250 und 260 - beispielsweise per Hand oder mit einer Standard-Zange - lassen sich die beiden Arretierplatten 120 und 130 zusammendrücken, so dass diese nur noch einen Abstand aufweisen, der dem Abstand B zwischen den beiden Öffnungsrändern 160 und 170 der Öffnung 50 entspricht. Somit ist es möglich, das Befestigungselement 10 aus der Öffnung 50 herauszuziehen und das Befestigungselement von der Trägerwand zu entfernen.

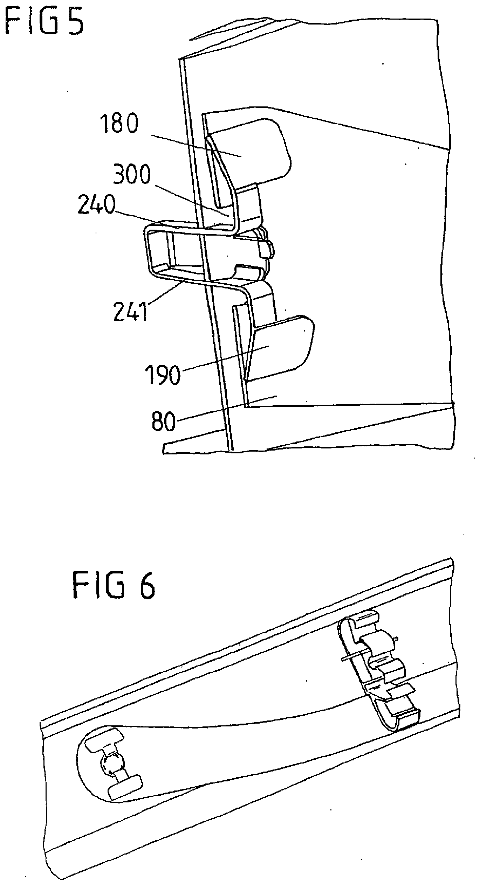

Im Zusammenhang mit der Figur 4 ist erkennbar, dass zur Befestigung des Teiles 80 dieses ein Loch 300 aufweist, durch das das Befestigungselement 10 mit seinem Schnappelement 30 vollständig hindurchgeführt ist. Das Teil 80 wird somit mit den beiden Anschlagsplatten 180 und 190 gehalten. Die Befestigung des Teiles 80 mittels des Befestigungselements 10 an der Trägerwand 40 ist in einem Schnitt nochmals im Detail in der Figur 5 und in einer Draufsicht in der Figur 6 gezeigt.

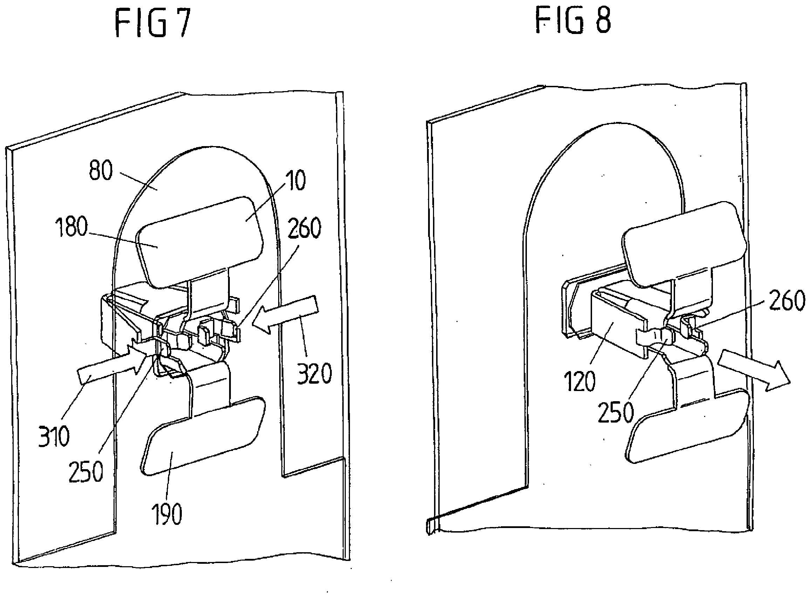

Die Figuren 7 und 8 zeigen das Entriegeln des Befestigungselementes 10 durch Zusammendrücken der beiden Entriegelungselemente 250 und 260. Die beiden Pfeile 310 und 320 deuten dabei an, wie auf die beiden Entriegelungselemente 250 und 260 Kraft ausgeübt werden muss, um zu einem Entriegeln zu gelangen. Das Befestigungselement 10 in seiner entriegelten Position ist in der Figur 8 gezeigt.

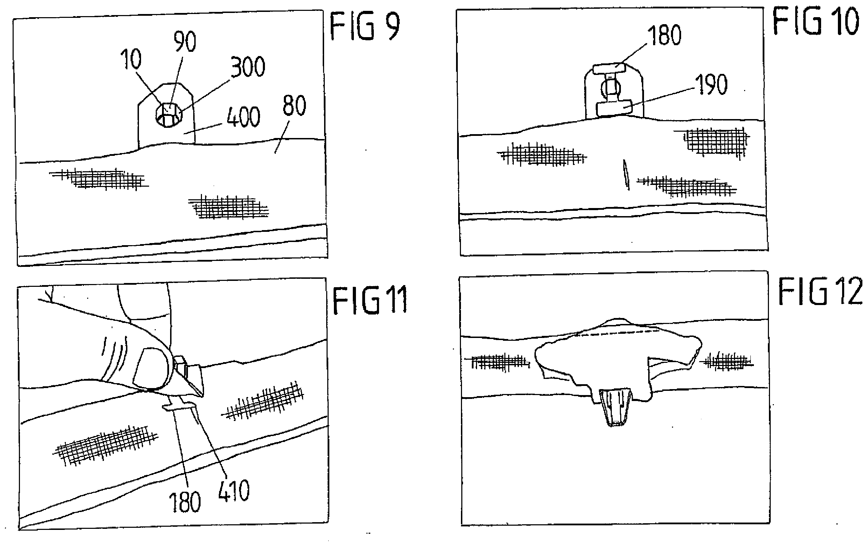

Im Zusammenhang mit den Figuren 9 bis 13 soll nun erläutert werden, wie mit dem Befestigungselement 10 ein Gassack eines Airbagmoduls oder das gesamte Airbagmodul an einem Träger, beispielsweise an einer Fahrzeugkarosserie, befestigt werden kann. Der Gassack ist also das "zu befestigende Teil", das gemäß Figur 4 mit dem Bezugszeichen 80 gekennzeichnet wird.

Der Gassack 80 weist zur Befestigung eine Lasche 400 mit einem Befestigungsloch 300 auf, durch das das Befestigungselement 10 teilweise hindurchgeschoben ist. Die Größe des Befestigungsloches 300 ist dabei derart gewählt, dass lediglich das Schnappelement 30 des Befestigungselements 10 hindurchgeführt werden kann, wohingegen das Anschlagselement 20 zu groß ist und somit nicht durch das Öffnungsloch 400 gelangen kann. Dies zeigen insbesondere die Figuren 10 und 11 im Detail.

In den Figuren 11 und 12 ist darüber hinaus erkennbar, dass die beiden Anschlagsplatten 180 und 190 zur weiteren Fixierung des Airbags 80 verwendet werden können, indem die beiden Anschlagsplatten 180 und 190 in eine Hülle des Gassacks durch einen Schlitz 410 eingeführt werden .

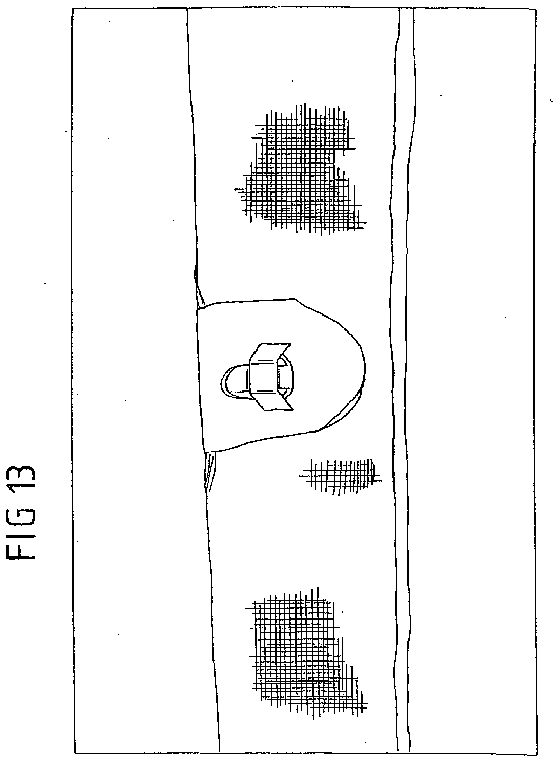

In der Figur 12 ist der Airbag 80 erkennbar, nachdem das Befestigungselement 10 durch die Öffnung 300 hindurchgeführt und mit den Anschlagsplatten 180 und 190 in der Hülle des Airbagmoduls "eingehängt" wurde. Die Figur 13 zeigt eine andere Sicht auf die resultierende Anordnung bestehend aus dem Befestigungselement 10 und dem Airbag 80.

Die in den Figuren 12 und 13 gezeigte resultierende Anordnung kann nun an der Trägerwand 40 mit der Öffnung 50 (vgl. Figuren 3 bis 8) festgerastet werden; bei der Trägerwand 40 kann es sich beispielsweise um eine Karosserie eines Kraftfahrzeuges handeln.

**Bezugszeichenliste**

| | |
|---|---|
| 10 | Befestigungselement bzw. Befestigungsclip |
| 20 | Anschlagselement |
| 30 | Schnappelement |
| 40 | Trägerwand |
| 50 | Öffnung in der Trägerwand |
| 60 | Vorderseite der Trägerwand |
| 70 | Rückseite der Trägerwand |
| 80 | zu befestigendes Teil |
| 90 | Grundplatte |
| 100, 110 | Seitenkanten |
| 120, 130 | Arretierplatten |
| 160, 170 | Öffnungsränder der Öffnung 50 |
| 180, 190 | Anschlagsplatten |
| 200, 210 | parallele Teilplatten |
| 220, 230 | abgewinkelte Teilplatten |
| 250, 260 | Entriegelungselemente |
| 240, 241 | Verbindungsplatten |
| 242, 243 | Seitenkanten |
| 300 | Öffnungsloch des Teils 80 |
| 310, 320 | Pfeile |
| 400 | Airbag-Befestigungslasche |
| 410 | Schlitz |

**Patentansprüche**

1. Anordnung aufweisend eine Trägerwand (40) eines Fahrzeugs, ein Befestigungselement (10) sowie ein Teil in Form eines Airbags (80) oder Airbagmoduls, der bzw. das mittels des Befestigungselements (10) an oder in dem Fahrzeug befestigt ist, wobei das Befestigungselement (10) zum Befestigen des Teiles (80) außen an der Trägerwand (40) hierzu in eine Öffnung (50) der Trägerwand eingesetzt ist,

   - wobei das Befestigungselement (10) derart ausgestattet ist, dass es die Öffnung (5) durchgreift und an der Trägerwand (40) verriegelt und ein Herausziehen des Befestigungselements (10) aus der Öffnung (50) unterbindet und
   - wobei das Befestigungselement (10) im verriegelten Zustand an beiden Seiten (60) und (70) der Trägerwand anliegt und zwar mit einem Anschlagselement (20) außen an der Trägerwand (40) - und damit an der dem Teil (80) zugewandten Seite der Trägerwand (40) - und mit einem Schnappelement (30) an der anderen, dem Teil (80) abgewandten Seite (70) der Trägerwand (40), wobei

   - mit dem Schnappelement (30) ein Entriegelungselement (250, 260) in Verbindung steht, das von außen zugänglich ist und ein Entriegeln des Schnappelements (30) und ein Herausziehen des Befestigungselements (10) aus der Öffnung (50) ermöglicht, wobei
   - das Schnappelement (30) eine Grundplatte (90) mit zwei parallelen oder zumindest annähernd parallelen Seitenkanten (100, 110) aufweist und dass an jeder dieser beiden Seitenkanten (11, 110) jeweils eine Arretierplatte (120, 130) angebracht ist, mit der das Befestigungselement (10) an der Trägerwand (40) arretiert wird,
   - wobei zwei Entriegelungselemente (250, 260) vorhanden sind, von denen eines (250) mit der einen Arretierplatte (180) und das andere (260) mit der anderen Arretierplatte (190) zusammenwirkt.

2. Anordnung nach Anspruch 1, **dadurch gekennzeichnet, dass** das Entriegelungselement (250, 260) die Öffnung (50) durchgreift.

3. Anordnung nach einem der vorhergehenden Ansprüche, **dadurch gekennzeichnet, dass** der Abstand der zwei Arretierplatten (120, 130) zueinander mit wachsendem Abstand von der Grundplatte (90) ansteigt, wobei der Abstand (A) der Arretierplatten (120, 130) an ihrem der Grundplatte (90) abgewandten Ende größer als der Abstand (B) der zugeordneten Öffnungsränder (160, 170) der Öffnung (50) der Trägerwand (40) ist.

4. Anordnung nach einem der vorhergehenden Ansprüche, **dadurch gekennzeichnet, dass** die Arretierplatten (120, 130) federnd ausgestaltet sind und derart zusammendrückbar sind, dass bei einem Einführen des Befestigungselements (10) in die Öffnung (50) der Abstand (A) der Arretierplatten (120, 130) durch Einwirkung der Öffnungsränder (160, 170) der Öffnung (50) derart reduziert werden kann, dass dieser dem Abstand (B) der Öffnungsränder (160, 170) entspricht.

5. Anordnung nach einem der vorangehenden Ansprüche, **dadurch gekennzeichnet, dass** die Entriegelungselemente (250, 260) mit ihrer jeweils zugeordneten Arretierplatte (120, 130) einstückig verbunden sind.

**6.** Anordnung nach einem der vorangehenden Ansprüche, **dadurch gekennzeichnet, dass** die Grundplatte (90) quadratisch oder rechteckförmig, zumindest im Wesentlichen quadratisch oder im Wesentlichen rechteckförmig, ausgestaltet ist, und ein weiteres Paar Seitenkanten (242, 243) aufweist, die zu den Seitenkanten (100, 110) mit den davon abgehenden Arretierplatten (120, 130) jeweils senkrecht stehen und die zueinander parallel verlaufen.

**7.** Anordnung nach Anspruch 6, **dadurch gekennzeichnet, dass** an jeder der zwei Seitenkanten (242, 243) des weiteren Seitenkantenpaares jeweils eine Verbindungsplatte (240, 241) angeordnet ist.

**8.** Anordnung nach Anspruch 7, **dadurch gekennzeichnet, dass** das Anschlagselement (20) zwei Anschlagsplatten (180, 190) aufweist, von denen eine mit der einen Verbindungsplatte (240) und die andere mit der anderen Verbindungsplatte (241) in Verbindung steht.

**9.** Anordnung nach Anspruch 8, **dadurch gekennzeichnet, dass** die Verbindungsplatten (240, 241) mit der zugeordneten Anschlagsplatte (180, 190) jeweils einstückig verbunden sind.

**10.** Anordnung nach einem der vorangehenden Ansprüche 8 oder 9, **dadurch gekennzeichnet, dass** die Anschlagsplatten (180, 190) derart abgewinkelt sind, dass diese bei arretiertem Befestigungselement (10) federnd an der Außenseite (60) der Trägerwand (40) anliegen.

**11.** Anordnung nach Anspruch 10, **dadurch gekennzeichnet, dass** die Anschlagsplatten (180, 190) jeweils eine Teilplatte (200, 210) aufweisen, die parallel zur Trägerwand (40) verläuft, sowie eine weitere Teilplatte (220, 230) aufweisen, die gegenüber der parallelen Teilplatte (200, 210) abgewinkelt ist.

**12.** Anordnung nach einem der vorangehenden Ansprüche, **dadurch gekennzeichnet, dass** das Befestigungselement (10) einstückig, vorzugsweise aus Metall oder Kunststoff und insbesondere als Stanzbiegeteil ausgebildet ist.

**Claims**

**1.** Arrangement comprising a support wall (40) of a vehicle, a fastening device (10) and a part (80) in the form of an airbag (80) or an airbag module fastened at or in the vehicle by means of the fastening device (10), wherein the fastening device (10) is inserted into an opening (50) of the support wall (40) for fastening the part (80) to the support wall (40) on the outside,

- wherein the fastening device (10) is configured in such a way that it extends through the opening (5) and is locked to the support wall (40) and prevents the fastening device (10) from being pulled out of the opening (50) and
- wherein the fastening element (10) in the locked state bears against both sides (60) and (70) of the support wall, namely, by a stop element (20) against the support wall (40) on the outside - and thus on the side of the support wall (40) facing the part (80) - and by a snap element (30) on the other side (70) of the support wall (40), facing away from the part (80), wherein
- a release element (250, 260) stands in connection with the snap element (30), being accessible from the outside and enabling a releasing of the snap element (30) and a pulling of the fastening device (10) out from the opening (50), wherein
- the snap element (30) has a base plate (90) with two parallel or at least nearly parallel side edges (100, 110), and on each of these two side edges (11, 110) there is arranged a locking plate (120, 130) by which the fastening device (10) is locked against the support wall (40),
- wherein two release elements (250, 260) are provided, one (250) of which interacts with the one locking plate (180) and the other (260) with the other locking plate (190)).

**2.** Arrangement according to claim 1, **characterized in that** the release element (250, 260) reaches through the opening (50).

**3.** Arrangement according to one of the preceding claims, **characterized in that** the distance between the two locking plates (120, 130) increases with increasing distance from the base plate (90), while the distance (A) between the locking plates (120, 130) at their end away from the base plate (90) is greater than the distance (B) between the corresponding edges (160, 170) of the opening (50) of the support wall (40).

**4.** Arrangement according to one of the preceding claims, **characterized in that** the locking plates (120, 130) are configured as a spring and can be compressed so that when the fastening device (10) is introduced into the opening (50) the distance (A) between the locking plates (120, 130) can be reduced by the action of the edges (160, 170) of the opening (50) such that it corresponds to the distance (B) between the opening edges (160, 170).

**5.** Arrangement according to one of the preceding claims, **characterized in that** the release elements (250, 260) are joined into a single piece with their respective locking plate (120, 130).

**6.** Arrangement according to one of the preceding claims, **characterized in that** the base plate (90) is configured as a square or rectangle, at least essentially as a square or essentially as a rectangle, and has another pair of side edges (242, 243) which stand perpendicular to the side edges (100, 110) with the locking plates (120, 130) emerging from them and which run parallel to each other.

**7.** Arrangement according to claim 6, **characterized in that** a connection plate (240, 241) is arranged on each of the two side edges (242, 243) of the additional pair of side edges.

**8.** Arrangement according to claim 7, **characterized in that** the stop element (20) has two stop plates (180, 190), one of which stands in connection with the one connection plate (240) and the other with the other connection plate (241).

**9.** Arrangement according to claim 8, **characterized in that** the connection plates (240, 241) are each joined as a single piece with the corresponding stop plate (180, 190).

**10.** Arrangement according to one of the preceding claims 8 or 9, **characterized in that** the stop plates (180, 190) are bent so that they lie as a spring against the outside (60) of the support wall (40) when the fastening device (10) is locked.

**11.** Arrangement according to claim 10, **characterized in that** the stop plates (180, 190) each have a partitioning plate (200, 210), which runs parallel to the support wall (40), as well as an additional partitioning plate (220, 230) which is bent with respect to the parallel partitioning plate (200, 210).

**12.** Arrangement according to one of the preceding claims, **characterized in that** the fastening device (10) is fashioned as a single piece, preferably from metal or plastic and especially as a punched and bent part.

**Revendications**

**1.** Agencement présentant une paroi porteuse (40) d'un véhicule, un élément de fixation (10) et une pièce sous forme d'un airbag (80) ou d'un module d'airbag qui est fixé sur ou dans la véhicule à l'aide de l'élément de fixation (10), l'élément de fixation (10) étant placé, pour la fixation de la pièce (80) à l'extérieur de la paroi porteuse (40), dans une ouverture (50) de la paroi porteuse,

- cet élément de fixation (10) étant configuré de telle façon qu'il traverse l'ouverture (5) et il se verrouille à la paroi porteuse (40), en empêchant ainsi toute extraction de l'élément de fixation (10) de l'ouverture (50), et
- qu'à l'état verrouillé, cet élément de fixation (10) repose sur les deux côtés (60) et (70) de la paroi porteuse, à savoir avec un élément d'arrêt (20) à l'extérieur sur la paroi porteuse (40) - et de ce fait sur le côté de la paroi porteuse (40) tourné vers la pièce (80) - et avec un élément d'encliquetage (30) sur l'autre côté (70) de la paroi porteuse (40) opposée à la pièce (80), sachant que :
- un élément de déverrouillage (250, 260) est en liaison avec l'élément d'encliquetage (30), élément de déverrouillage qui est accessible de l'extérieur et qui permet un déverrouillage de l'élément d'encliquetage (30) et une extraction de l'élément de fixation (10) de l'ouverture (50), sachant que
- l'élément d'encliquetage (30) comporte une plaque de base (90) munie de deux arêtes latérales parallèles ou au moins approximativement parallèles (100, 110) et que sur chacune de ces deux arêtes latérales (11, 110) respectives est fixée une plaque d'arrêt (120, 130) par laquelle l'élément de fixation (10) est bloqué sur la paroi porteuse (40),
- et où deux éléments de déverrouillage (250, 260) sont présents, dont l'un (250) interagit avec l'une des plaque d'arrêt (180) et l'autre (260) avec l'autre plaque d'arrêt (190).

**2.** Agencement selon la revendication 1, **caractérisé en ce que** l'élément de verrouillage (250, 260) s'étend à travers l'ouverture (50).

**3.** Agencement selon l'une des revendications qui précèdent, **caractérisé en ce que** la distance entre les deux plaques d'arrêt (120, 130) augmente à mesure que la distance par rapport à la plaque de base (90) s'accroît, si bien que la distance (A) des plaques d'arrêt (120, 130) sur leur extrémité opposée à la plaque de base (90) est plus grande que la distance (B) des bords d'ouverture correspondants (160, 170) de l'ouverture (50) de la paroi porteuse (40).

**4.** Agencement selon l'une des revendications qui précèdent, **caractérisé en ce que** les plaques d'arrêt (120, 130) exercent un effet de ressort et peuvent être comprimées de telle façon que lors de l'introduction de l'élément de fixation (10) dans l'ouverture (50), la distance (A) des plaques d'arrêt (120, 130) sous l'action des bords d'ouverture (160, 170) de l'ouverture (50) peut être réduite de telle sorte que cette distance corresponde à la distance (B) des bords d'ouverture (160, 170).

**5.** Agencement selon l'une des revendications qui précèdent, **caractérisé en ce que** les éléments de déverrouillage (250, 260) sont reliés d'un seul tenant aux plaques d'arrêt (120, 130) respectives qui leur sont attribuées.

6. Agencement selon l'une des revendications qui précèdent, **caractérisé en ce que** la plaque de base (90) adopte une forme carrée ou rectangulaire, ou du moins pour l'essentiel carrée ou pour l'essentiel rectangulaire, et une autre paire d'arêtes latérales (242, 243), qui sont placées respectivement à la verticale des arêtes latérales (100, 110) avec les plaques d'arrêt (120, 130) qui en partent, et qui courent parallèlement l'une par rapport à l'autre.

7. Agencement selon la revendication 6, **caractérisé en ce que** sur chacune des deux arêtes latérales (242, 243) de l'autre paire d'arêtes latérales est respectivement disposée une plaque de liaison (240, 241).

8. Agencement selon la revendication 7, **caractérisé en ce que** l'élément d'arrêt (20) comprend deux plaques de butée (180, 190), dont l'une est en liaison avec une plaque de liaison (240), et l'autre avec l'autre plaque de liaison (241).

9. Agencement selon la revendication 8, **caractérisé en ce que** les plaques de liaison (240, 241) sont respectivement reliées d'un seul tenant aux plaques de butée (180, 190) qui leur sont attribuées.

10. Agencement selon l'une des revendications 8 ou 9 qui précèdent, **caractérisé en ce que** les plaques de butée (180, 190) sont coudées de telle manière que sur l'élément de fixation (10) bloqué, elles reposent avec un effet de ressort sur le côté extérieur (60) de la paroi porteuse (40).

11. Agencement selon la revendication 10, **caractérisé en ce que** les plaques d'arrêt (180, 190) comportent chacune une plaque partielle (200, 210) qui est placée parallèlement au mur porteur (40), et qui comportent une autre plaque partielle (220, 230) qui est positionnée à un certain angle par rapport à la plaque partielle (200, 210) parallèle.

12. Agencement selon l'une des revendications qui précèdent, **caractérisé en ce que** l'élément de fixation (10) est fabriqué d'un seul tenant, de préférence en métal ou en matière plastique, et en particulier en tant que pièce de flexion à estamper.

# FIG 1

# FIG 2

FIG 3

FIG 4

EP 2 123 918 B1

FIG 5

180
300
240
241
190
80

FIG 6

11

EP 2 123 918 B1

FIG 8

260
250
120

FIG 7

10
260
320
80
180
190
310
250

12

FIG 10

FIG 12

FIG 9

FIG 11

FIG 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0228690 A1
- US 4728068 A
- EP 1186787 A
- US 5539962 A
- US 3864789 A
- DE 4026922 A1